# EUROPEAN PATENT APPLICATION

(11) **EP 4 745 619 A1**
(43) Date of publication of application: **20.05.2026**
(21) Application number: 25154930.9
(22) Date of filing: 30.01.2025
(51) Int. Cl.: G01S 7/48, G01S 17/89, G01S 17/931

(54) **OBSTACLE DETECTION METHOD AND SYSTEM**

(30) Priority: 13.11.2024 TW 113143606
(71) Applicant: Industrial Technology Research Institute, 310401 Hsinchu (TW)
(72) Inventor: Chan, Chih Shong, 701028, R.O.C. Tainan City (TW); TSAI, Pei-Chuan, Zhudong Township, Hsinchu County, R.O.C. (TW)
(74) Representative: dompatent

(57) **Abstract**

The present disclosure proposes an obstacle detection method and system. The obstacle detection method, performed by a processing device (12), includes: performing sensing by a LiDAR (Light Detection And Ranging) sensor (14) to obtain first point clouds at a sensing range of the LiDAR sensor (14), wherein the sensing range matches a moving direction of a mobile vehicle (MS), obtaining non-ground points according to the first point clouds, obtaining first boundary points (A1) and second boundary points (A2) from the non-ground points, obtaining a path centerline according to an average of the first boundary points (A1) and the second boundary points (A2), building a detection cross section (CS) by using the path center line (L2) according to a default encircle range, and performing an obstacle detection by using the detection cross section (CS) to output a detection result.

## Description

### BACKGROUND

### 1. Technical Field

This disclosure relates to an obstacle detection method and system.

### 2. Related Art

Obstacle, such as personnel, animals, rocks, or other obstacles, intruding into tracks, may lead to train derailments, equipment damage, and even pose risks to the safety of passengers or intruders. By detecting an intrusive obstacle in real time, it is possible to prevent accident, protect lives and property, reduce delay, and maintain the operational efficiency of transportation system, thereby ensuring the smooth functioning of the overall transportation network. Therefore, detecting the intrusive obstacle has become one of the critical issues of modern concern.

Current systems for detecting the intrusive obstacle into the tracks work by employing sensors deployed along the tracks and/or by employing image comparison method.

### SUMMARY

However, there is a need for obstacle detection method that can be applied across different scenarios and environments.

According to one or more embodiments, an obstacle detection method is performed by a processing device, and includes: using a LiDAR sensor to perform sensing to obtain a plurality of first point clouds in a sensing range of the LiDAR sensor; obtaining a plurality of non-ground points according to the first point clouds; obtaining a plurality of first boundary points and a plurality of second boundary points from the non-ground points; obtaining a path center line according to averages of the first boundary points and the second boundary points, building a detection cross section by using the path center line according to a default encircle range; and performing an obstacle detection by using the detection cross section to output a detection result. Herein, the sensing range of the LiDAR sensor matches a moving direction of a mobile vehicle.

According to one or more embodiments, an obstacle detection system includes a memory device and a processing device. The memory device is configured to store a default encircle range. The processing device is electrically connected to or in communication connection with the memory device and a LiDAR (Light Detection And Ranging) sensor. The processing device is configured to: obtain a plurality of first point clouds in a sensing range of the LiDAR sensor from the LiDAR sensor; obtain a plurality of non-ground points according to the first point clouds; obtain a plurality of first boundary points and a plurality of second boundary points from the non-ground points; obtain a path center line according to averages of the first boundary points and the second boundary points; build a detection cross section by using the path center line according to the default encircle range; and perform detection by using the detection cross section to output a detection result. Herein, the sensing range of the LiDAR sensor matches a moving direction of a mobile vehicle.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a block diagram illustrating an obstacle detection system according to an embodiment of the present disclosure;
FIG. 2 is a flow chart illustrating an obstacle detection method according to an embodiment of the present disclosure;
FIG. 3A is a schematic diagram illustrating a default encircle range in an exemplary example;
FIG. 3B is a schematic diagram illustrating a detection cross section in the exemplary example;
FIG. 4 is a flow chart illustrating obtaining the path center line of the obstacle detection method according to an embodiment of the present disclosure;
FIG. 5A is a schematic diagram illustrating boundary points, average center points and a temporary center line according to an embodiment of the present disclosure;
FIG. 5B is a schematic diagram illustrating temporary points and the path center line according to an embodiment of the present disclosure;
FIG. 6 is a flow chart illustrating performing an obstacle detection of the obstacle detection method according to an embodiment of the present disclosure; and
FIG. 7 is a schematic diagram illustrating performing clustering on second point clouds according to an embodiment of the present disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

The obstacle detection system and method according to one or more embodiments described below may be applied to scenarios, i.e. various driving sites such as train track, monorail track, or roadway, and used to determine whether any obstacle intrudes into the driving site, which may be the train track, monorail track, or roadway.

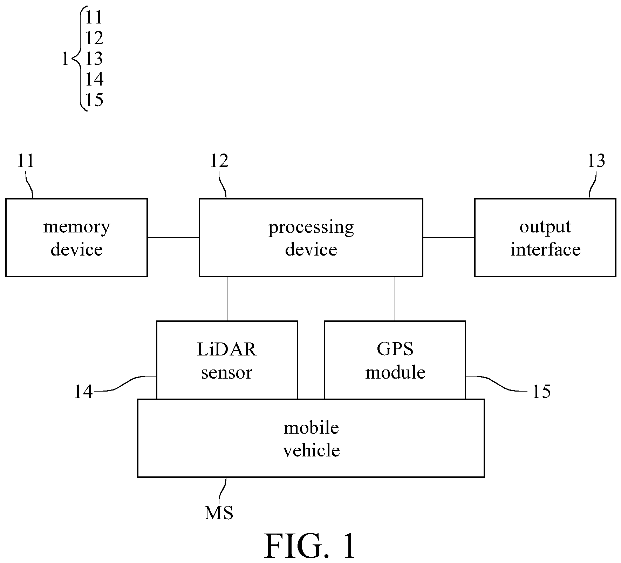

Please refer to FIG. 1, wherein FIG. 1 is a block diagram illustrating an obstacle detection system 1 according to an embodiment of the present disclosure. As shown in FIG. 1, the obstacle detection system 1 includes a memory device 11 a processing device 12, an output interface 13, a LiDAR (Light Detection And Ranging) sensor 14 and a global positioning system (GPS) module 15. The memory device 11, the output interface 13, the LiDAR sensor 14 and the GPS module 15 are in communication with or electrically connected to the processing device 12, wherein the number of the LiDAR sensor 14 may be one or more. The output interface 13, the LiDAR sensor 14 and the GPS are disposed on a mobile vehicle MS. The output interface 13, the LiDAR sensor 14 and the GPS module 15 are optionally disposed.

The memory device 11 is configured to store a default encircle range. The default encircle range may have default shape and size, and the default encircle range may be set by a user according to application requirements. The default encircle range may be rectangular, trapezoidal, or circular, the default encircle range may be any shape, the present disclosure is not limited thereto. The memory device 11 may be implemented by one or more memories. In some embodiments, the memory may be a non-volatile memory (NVM), such as a read-only memory (ROM), a flash memory and/or a non-volatile random access memory (NVRAM).

The processing device 12 is configured to perform an obstacle detection method to detect whether there is an obstacle according to the sensing result of the LiDAR sensor 14 and the default encircle range stored in the memory device 11. The processing device 12 may be implemented by one or more processors. In some embodiments, the processor is, for example, a central processing unit, a graphics processing unit, a microcontroller, a programmable logic controller or any other processor with signal processing function.

The output interface 13 is configured to present a detection result of the processing device 12. The output interface 13 may include a screen on the mobile vehicle MS that can be seen by a driver of the mobile vehicle, a screen of a control center, etc., the present disclosure does not limit the output subject of the detection result. The control center may be in communication connection with the processing device 12 and may be a remote device (for example, a server) monitoring the operating status of the trains.

The LiDAR sensor 14 is disposed on the mobile vehicle MS. The LiDAR sensor 14 may be disposed at a side of the mobile vehicle MS facing a moving direction of the mobile vehicle MS, and the current sensing range of the LiDAR sensor 14 may match the moving direction.

The GPS module 15 may include one or more processor and one or more communication interfaces (for example, UART, SPI, I2C, or USB). The GPS module 15 is disposed on the mobile vehicle MS to output a current location of the mobile vehicle MS to the processing device 12.

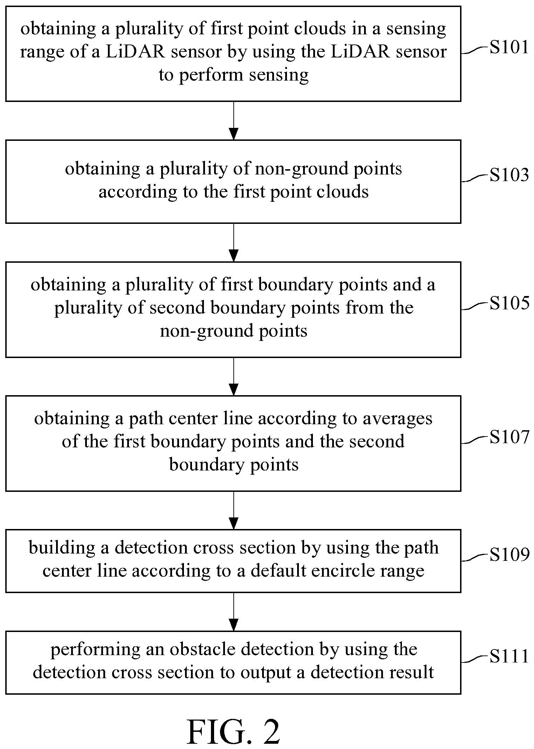

Please refer to FIG. 1 and FIG. 2, wherein FIG. 2 is a flow chart illustrating an obstacle detection method according to an embodiment of the present disclosure. As shown in FIG. 2, the obstacle detection method includes: obtaining a plurality of point clouds (hereinafter referred to as first point clouds) in a sensing range of the LiDAR sensor by using the LiDAR sensor to perform sensing (step S101); obtaining a plurality of non-ground points according to the first point clouds (step S103); obtaining a plurality of first boundary points and a plurality of second boundary points from the non-ground points (step S105); obtaining a path center line according to averages of the first boundary points and the second boundary points (step S107); building a detection cross section by using the path center line according to a default encircle range (step S109); and performing an obstacle detection by using the detection cross section to output a detection result (step 5111).

In step S101, the processing device 12 may control the LiDAR sensor 14 to perform sensing to obtain the first point clouds in the sensing range of the LiDAR sensor 14 from the LiDAR sensor 14. The first point clouds may be points of consecutive frames and may be generated by the same LiDAR sensor 14, wherein each of the consecutive frames may include multiple points. In an embodiment, the current sensing range of the LiDAR sensor 14 matches a moving direction of the mobile vehicle MS disposed with the LiDAR sensor 14.

In step S103, the processing device 12 selects the non-ground points from the first point clouds. In an embodiment, the processing device 12 may determine point clouds, each with a height higher than a default ground height, among the first point clouds as the non-ground points. The default ground height may be an average of a plurality of ground heights. In some embodiments, the default ground height may be pre-set by the user according to application scenario, and then stored in the memory device 11.

In step S105, the processing device 12 obtains the first boundary points and the second boundary points from the non-ground points. In an embodiment, the processing device 12 obtains the first boundary points and the second boundary points from the non-ground points according to reflection intensities of the non-ground points. The processing device 12 may determine a plurality of points, each with reflection intensities lower than a default intensity, among the non-ground points as the first boundary points and the second boundary points. In some embodiments, an extension direction through distribution of the first boundary points and an extension direction through distribution of the second boundary points may both be parallel to the moving direction of the mobile vehicle MS. In some embodiments, the default intensity may be pre-set by the user according to application scenario, and then stored in the memory device 11. In some embodiments, the default intensity may be an average intensity of the reflective intensities of the point clouds corresponding to material of the driving site. In an exemplary case, take the train track for example. Herein, the LiDAR sensor 14 receives infrared light diffusion, and the smoothness of metal results in less scattering received by the LiDAR sensor 14, causing the reflective intensity of the point cloud corresponding to metal material to be lower than that of the point cloud corresponding to non-metal material. Additionally, the rail includes a left rail head and a right rail head. Therefore, the default intensity may be pre-set as the average intensity of reflective intensities of the point cloud corresponding to non-metal material. In the step S105, the processing device 12 selects a plurality of non-ground points, which distribute over the extension line and have reflection intensities lower than the default intensity, from the non-ground points as the first boundary points corresponding to the left rail head, and selects a plurality of another non-ground points, which distribute over another extension line and have reflection intensities lower than the default intensity, from the non-ground points as the second boundary points corresponding to the right rail head. Herein, an extension direction of the extension line, i.e. the extension direction through distribution of the first boundary points, and an extension direction of the another extension line, i.e. the extension direction through distribution of the second boundary points, both are parallel to a moving direction of a train. In another exemplary case, take roadway for example. Herein, since the reflection intensity of the point cloud corresponding to material of a lane boundary line of the roadway is lower than that of the point cloud corresponding to material of non-lane boundary line of the roadway (such as pavement of the roadway), and the lane boundary line of the roadway includes a left boundary line and a right boundary line, such that, in step S105, the processing device 12 selects a plurality of non-ground points, which distribute over the left boundary line and have reflection intensities lower than the default intensity, from the non-ground points as the first boundary points and selects a plurality of another non-ground points, which distribute over the right boundary line and have reflection intensities lower than the default intensity, from the non-ground points as the second boundary points.. That is, the plurality of first boundary points and the plurality of second boundary points are a plurality of non-ground points each with a reflection intensity satisfying an intensity condition among the plurality of non-ground points, and the intensity condition is related to the material of driving site for the mobile vehicle MS.

In step S107, the processing device 12 obtains the path center line according to the averages of the first boundary points and the second boundary points. In an embodiment, the processing device 12 calculates an average of each one of the first boundary points and a corresponding one of the second boundary points to obtain the path center line between a line defined by the first boundary points and a line defined by the second boundary points. For each of the first boundary points, a second boundary point, among the second boundary points, with a shortest distance to the first boundary point may be determined as corresponding to the first boundary point. The line defined by the first boundary points and the line defined by the second boundary points may be parallel to the extension direction. Take the train track for example. In this example, the path center line may be regarded as a center line of the train track, and the path center line may be substantially parallel to the moving direction of train (i.e. the mobile vehicle MS).

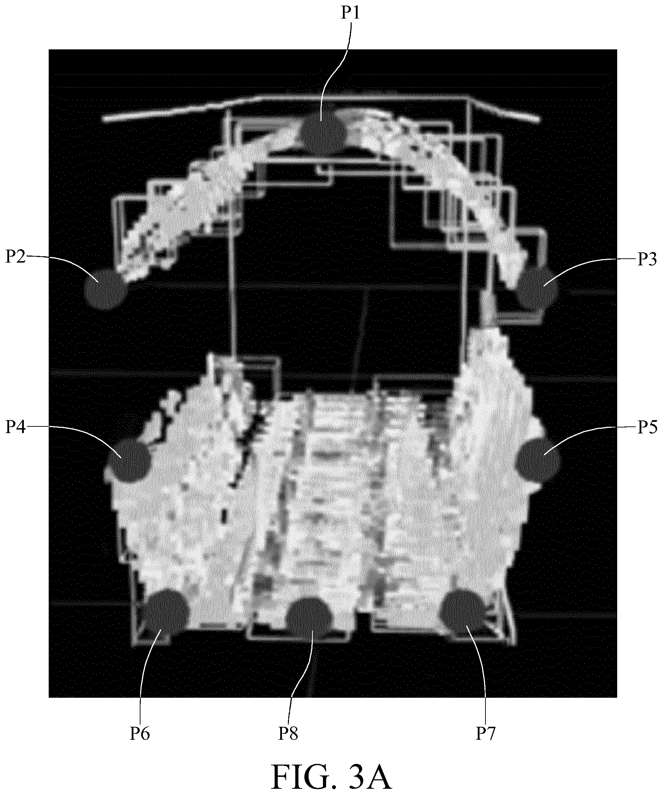

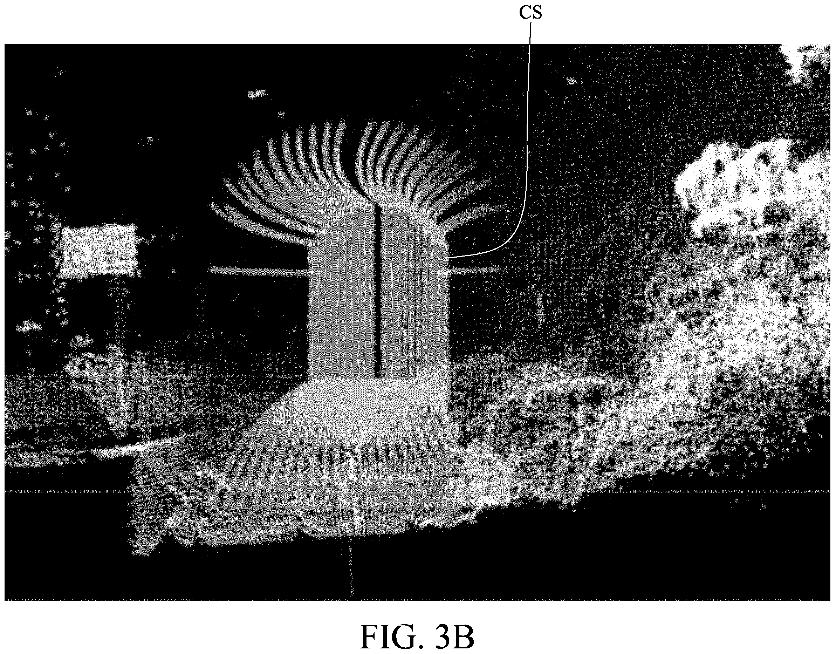

In step S109, the processing device 12 establishes the detection cross section by using the path center line according to the default encircle range stored in the memory device 11. In some embodiments, the default encircle range may be defined by a plurality of default points. In an embodiment, the processing device 12 uses the path center line as a normal vector of the detection cross section to create the detection cross section with the shape of the default encircle range. The shape of the detection cross section may be the same as the shape of the default encircle range, or a shape of a partial contour of the detection cross section may be the same as the shape of the default encircle range. Please refer to both FIG. 3A and FIG. 3B, wherein FIG. 3A is a schematic diagram illustrating a default encircle range in an exemplary example, and FIG. 3B is a schematic diagram illustrating a detection cross section corresponding to the default encircle range shown in FIG. 3A. according to an embodiment of the present disclosure. FIG. 3A and FIG. 3B show an example of the train track

In FIG. 3A, the default encircle range is formed of a range circled by default point P1 to default point P8. Parameters of the default points P1 to P8 may be the parameters shown in table 1 below. The processing device 12 uses the path center line as the normal vector, and expands the default encircle range circled by the default points P1 to P8 to the left and to the right to form the detection cross section CS as shown in FIG. 3B. The locations of the default points and the parameters shown in FIG. 3A and FIG. 3B as well as table 1 are merely examples, the present disclosure is not limited thereto.

**Table 1**

| Default point | Height from the ground (m) | Distance to the path center line (m) |
|---|---|---|
| P1 | 4.45 to 4.75 | 0 |
| P2 | 3.2 to 3.8 | 1.89 |
| P3 | 3.2 to 3.8 | 1.89 |
| P4 | 1.5 | 1.89 |
| P5 | 1.5 | 1.89 |
| P6 | 0.45 | 1.5 |
| P7 | 0.45 | 1.28 |
| P8 | 0.45 | 0 |

In step 5111, the processing device 12 performs the obstacle detection by using the detection cross section to output the detection result. Take FIG. 3B for example, the processing device 12 may use the first point clouds to determine whether there is an obstacle located in the detection cross section CS and output the detection result accordingly. The detection result may be output to the output interface 13.

According to one or more embodiments of the present disclosure, the obstacle detection system 1 or obstacle detection method may, by using the LiDAR sensor to perform the obstacle detection, enable adaptability to environments such as nighttime and rainy conditions, thereby avoiding inaccuracies in detection results caused by environmental factors. Furthermore, according to one or more embodiments of the present disclosure, the obstacle detection system 1 or obstacle detection method does not require real-time monitoring by personnel, the deployment of multiple sensors along the moving direction of the moving vehicle, and/or the establishment of a database storing a large amount of image data. Thus, according to one or more embodiments of the present disclosure, the obstacle detection system 1 or obstacle detection method may reduce the cost of performing the obstacle detection. In addition, according to one or more embodiments of the present disclosure, the obstacle detection system 1 or obstacle detection method may be used perform the obstacle detection without the need to pre-record all potential obstacle data, providing high flexibility and adaptability.

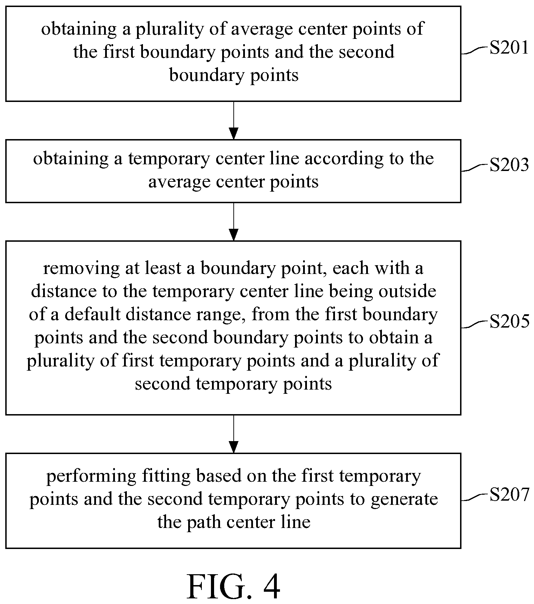

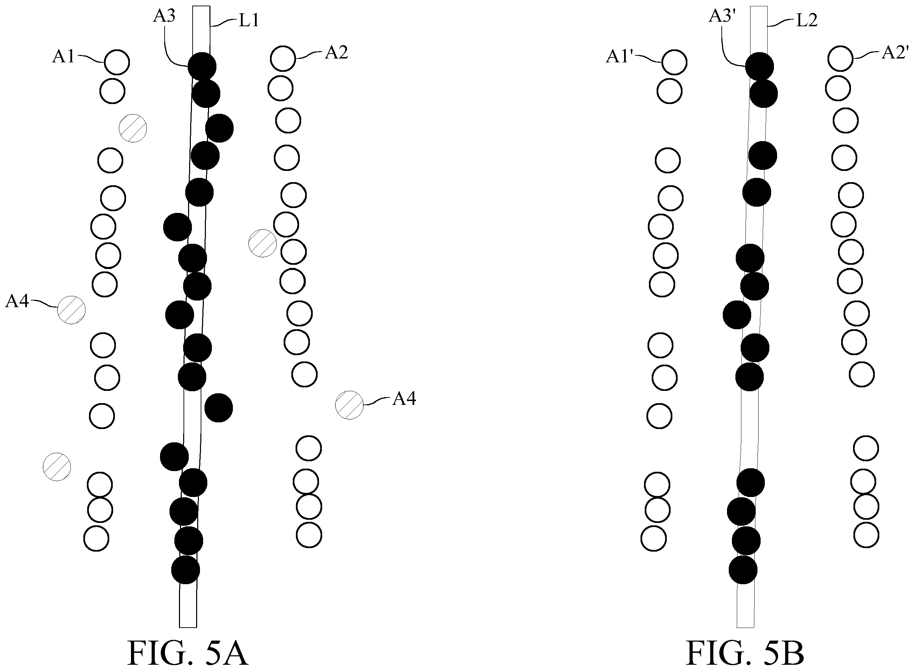

Please refer to FIG. 1, FIG. 4, FIG. 5A and FIG. 5B, wherein FIG. 4 is a flow chart illustrating obtaining the path center line of the obstacle detection method according to an embodiment of the present disclosure, FIG. 5A is a schematic diagram illustrating boundary points, average center points and a temporary center line according to an embodiment of the present disclosure, and FIG. 5B is a schematic diagram illustrating temporary points and the path center line according to an embodiment of the present disclosure. FIG. 4 may be regarded as a detailed flow chart of an embodiment of step S107 of FIG. 2. As shown in FIG. 4, obtaining the path center line may include: obtaining a plurality of average center points of the first boundary points and the second boundary points (step S201); obtaining a temporary center line according to the average center points (step S203); removing at least a boundary point, each with a distance to the temporary center line being outside of a default distance range, from the first boundary points and the second boundary points to obtain a plurality of first temporary points and a plurality of second temporary points (step S205); and performing fitting based on the first temporary points and the second temporary points to generate the path center line (step S207). The present disclosure does not limit the sequence of obtaining the boundary points and the average center points in step S201. Step S201 does not intend to limit that the average center points can only be obtained after obtaining all boundary points. For example, a corresponding average center point may be obtained after obtaining one first boundary point and one second boundary point.

In FIG. 5A, the blank circles at one side of the temporary center line L1 are the first boundary points A1, the blank circles at the other side of the temporary center line L1 are the second boundary points A2, and the black circles overlapping the temporary center line L1 are the average center points A3. In FIG. 5B, the blank circles at one side of the path center line L2 are the first temporary points A1', the blank circles at the other side of the path center line L2 are the second temporary points A2', and the black circles overlapping the path center line L2 are temporary center points A3'.

In step S201, the processing device 12 may perform average calculation on the first boundary points A1 and the second boundary points A2 represented by blank circles in FIG. 5A to obtain the average center points A3. Take the train track for example, where the average center points A3 represented by black circles in FIG. 5A may be regarded as potential center points of the track.

In step S203, the processing device 12 may perform fitting on the average center points A3 to fit the average center points A3 into the temporary center line L1. Take the train track for example, where the temporary center line L1 may be regarded as potential center line of the track.

In step S205, the processing device 12 removes at least a boundary point A4 (represented by slanted circles in FIG. 5A) from the first boundary points A1 and the second boundary points A2 to obtain the first temporary points A1' (i.e. the rest of the first boundary points A1) and the second temporary points A2' (i.e. the rest of the second boundary points A1) represented by the blank circles in FIG. 5B, wherein a vertical distance from each boundary point A4 to the temporary center line L1 does not fall within the default distance range. In other words, in step S205, take the train track for example. In this case, the processing device 12 may delete one or more boundary points, each deviating from the rail heads, from the first boundary points A1 and the second boundary points A2 to generate the first temporary points A1' and the second temporary points A2'. A lower limit of the default distance range may be a first default distance, and an upper limit of the default distance range may be a second default distance. In other words, the processing device 12 may remove at least a boundary point A4, each having a vertical distance to the temporary center line L1 smaller than the first default distance or greater than the second default distance, from the first boundary points A1 and the second boundary points A2 to generate the first temporary points A1' and the second temporary points A2'. In some embodiments, the first default distance and the second default distance depend on the driving site for the mobile vehicle MS. In an exemplary case, the first default distance and the second default distance are defined based on a width of the driving site (value) and a default error range (value) (hereinafter referred to as a first default error range). Take the train track for example, where the first default distance may be a half of the width of the track subtracted by the first default error range, and the second default distance may be the half of the width of the track added by the first default error range. In some embodiments, the first default error range may be 10% of the half of the width of the track, but the present disclosure is not limited thereto. Further, the processing device 12 may delete at least an average center point A3 corresponding to the deleted boundary pointA4. That is, the processing device 12 may delete one or more average center points A3 corresponding to the deleted the first boundary points and/or the second boundary points to generate the temporary center points A3' (represented by black circles in FIG. 5B). In an embodiment, if both the first boundary points A1 and the second boundary points A2 does not contain any one with a vertical distance to the temporary center line L1 being smaller than the first default distance or greater than the second default distance, then the processing device 12 may not delete any points, the first boundary points A1 are the first temporary points A1', the second boundary points A2 are the second temporary points A2', and the average center points A3 are the temporary center points A3'. That is, in step S205, the processing device 12 does not remove any boundary point from the first boundary points A1 and the second boundary points A2.

In step S207, the processing device 12 may perform fitting based on the first temporary points A1' and the second temporary points A2' to generate the path center line L2. Specifically, the processing device 12 may perform fitting on the temporary center points A3' corresponding to the first temporary points A1' and the second temporary points A2' to generate the path center line L2. In this embodiment, FIG. 5A and FIG. 5B illustrate the temporary center line L1 and the path center line L2 to have certain width for the purpose of description, in actual application, the widths of the temporary center line L1 and the path center line L2 may be wider or narrow that that shown in FIG. 5A and FIG. 5B, the present disclosure does not limit the widths of the temporary center line L1 and the path center line L2.

According to one or more embodiments of the present disclosure, the obstacle detection system 1 or obstacle detection method may, through the process obtaining the path center line may prevent the LiDAR sensor from generating errors in sensing results for distant areas, which could otherwise lead to incorrect detection result. Therefore, by employing the above embodiments for obtaining the path center line, it is possible to effectively detect the distance between obstacle and the path center line, thereby producing reasonable detection result. Furthermore, by obtaining the path center line, during the movement of the mobile vehicle, the basis for the obstacle detection may be quickly corrected when there is a deviation between the currently generated path center line and the previously generated path center line.

In an embodiment, in step S205, a distance between two temporary points, adjacent to each other in a default direction, among the first temporary points A1 and the second temporary points A2 falls within a first default distance range, and a distance between two temporary points, adjacent to each other in the moving direction of the mobile vehicle, among the first temporary points A1' and the second temporary points A2' falls within a second default distance range. The default direction may be perpendicular to the moving direction. In other words, a distance between each of the first temporary points A1' and the second temporary point A2' adjacent thereto in the default direction may fall within the first default distance range. Further, a distance between any two of the first temporary points A1' that are adjacent to each other in the moving direction may fall within the second default distance range, and a distance between any two of the second temporary points A2' that are adjacent to each other in the moving direction may fall within the second default distance range. A middle value of the first default distance range may be greater than a middle value of the second default distance range. In some embodiments, the first default distance range and the second default distance range depend on the driving site for the mobile vehicle. In an exemplary case, the first default distance range and the second default distance range are defined based on the width of the driving site and a default error range (hereinafter referred to as a second default error range). Take the train track for example, where an upper limit of the first default distance range may be the width of the track added by the second default error range, a lower limit of the first default distance range may be the width of the subtracted by the second default error range, and the second default distance range may be set according to application requirements. The second default error range may be the same as or different from the first default error range corresponding to the first default distance and the second default distance described above. The first default distance range indicates that a distance between the first temporary point A1' and the second temporary point A2' that are adjacent to each other in the default direction may be the width of the track with or without a tolerable error (e.g. the default error range), and the second default distance range indicates that the two first temporary points A1' that are adjacent to each other in the moving direction represent the same side of the rail head of the train track, same for the second temporary points A2'.

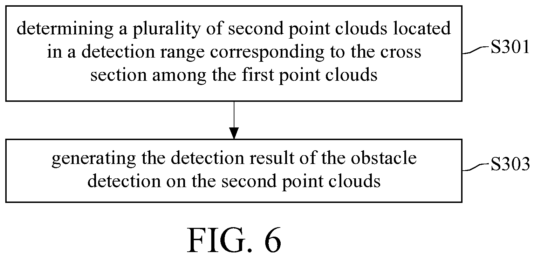

Please refer to FIG. 1 and FIG. 6, wherein FIG. 6 is a flow chart illustrating performing the obstacle detection of the obstacle detection method according to an embodiment of the present disclosure. FIG. 6 may be regarded as a detailed flowchart of step 5111 of FIG. 2. As shown in FIG. 6, performing the obstacle detection may include: determining a plurality of point clouds (hereinafter referred to as second point clouds) located in a detection range corresponding to the cross section among the first point clouds (step S301); and generating the detection result of the obstacle detection on the second point clouds (step S303).

In step S301, the processing device 12 may select the second point clouds from the first point clouds, wherein the second point clouds are the ones of the first point clouds that locate in the detection range corresponding to the cross section. The detection range may be a three-dimensional range. The detection range may be a range formed of a plurality of consecutive frames of detection cross sections.

In step S303, the processing device 12 may determine whether the second point clouds indicate the presence of an obstacle to determine whether there is an obstacle located in the detection range corresponding to the cross section. In some embodiments, the processing device 12 may use the determination result as the detection result. In an embodiment of step S303, the processing device 12 may perform clustering on the second point clouds to generate object geometric information of an object, and output a notification in response to that an intrusion event is determined based on the object geometric information. The object geometric information indicates at least one of a location and a size of the object. The location may be a relative location of the object (the clustered second point clouds) to the detection range and/or the detection cross section.

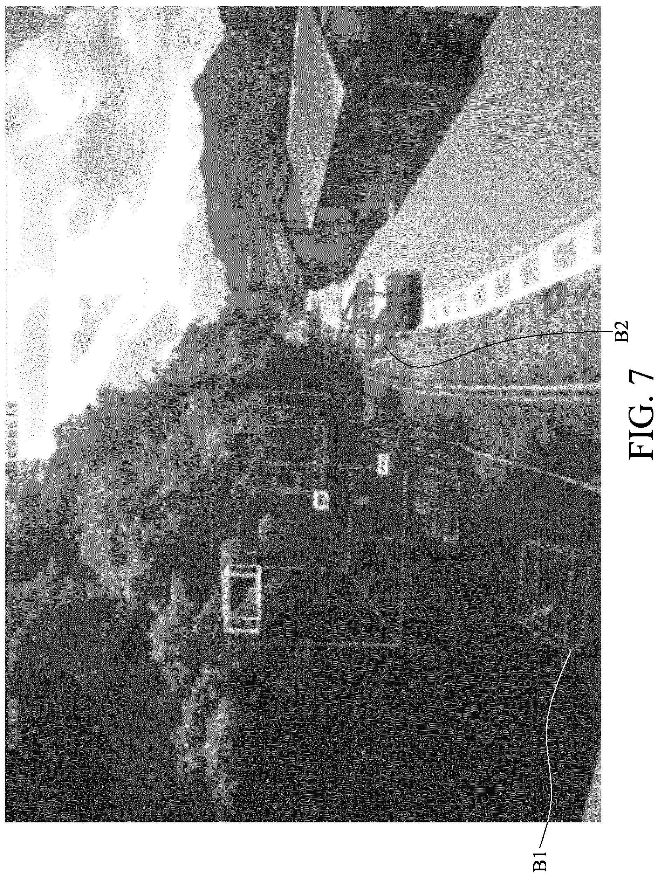

Please refer to FIG. 7, wherein FIG. 7 is a schematic diagram illustrating performing clustering on second point clouds according to an embodiment of the present disclosure. In an embodiment, the processing device 12 may perform Euclidean cluster algorithm on the second point clouds located in the detection range to generate a plurality of bounding boxes shown in FIG. 7. FIG. 7 exemplarily labels a first bounding box B1 of a first object and a second bounding box B2 of a second object. The object geometric information of the first bounding box B1 may indicate the location of the projection of the first object onto the detection cross section and/or a three-dimensional size of the first object; and the object geometric information of the second bounding box B2 may indicate the location of the projection of the second object onto the detection cross section and/or a three-dimensional size of the second object.

The processing device 12 may determine whether there is an intrusion event based on table 2 below, wherein the table 2 uses the train track as an example. In table 2, the "boundary" field is used to represent the boundary lines of the detection cross section, such as the boundary lines formed by the default points P1 to P8 in FIG. 3A; the "distance to the path center line" field is used to represent a width of the detection cross section; the "object size" field is used to represent the length, width and height of the object; the "object height" field is used to represent the distance between the object and the ground; and the "whether the object contacts the ground" field is used to represent whether the object should contact the ground to be determined as meeting the corresponding risk.

**Table 2**

| Risk | Boundary | Distance to the path center line | Object size | Object height | Whether the object contacts the ground |
|---|---|---|---|---|---|
| highest | boundary of the train | within 1.5 meters on both sides of the path center line | any side greater than 12.5 cm | within 5 meters | not taken into consideration |
| high | boundary of the building | within 1.5 meters to 1.9 meters on both sides of the path center line | any two sides greater than 25 cm | within 5 meters | not taken into consideration |
| middle | boundary of the electric pole | within 1.9 meters to 2.5 meters on both sides of the path center line | any two sides greater than 50 cm | within 5 meters | contacts the ground |
| low | potential area | 2.5 meters away from both sides of the path center line | any two sides greater than 1 m | within 8 meters | contacts the ground |

Referring to table 2, when the processing device 12 determines, according to the object geometric information of the first object, that the first bounding box B1 is located on the boundary of the train, distance to the path center line is smaller than 1.5 m, at least one side of the first object is greater than 12.5 cm and a distance of to the ground is smaller than 5 m, the processing device 12 may determine the intrusion event occurs and output a notification of the highest risk regardless of whether the first object contacts the ground. In some, embodiments, the processing device 12 may output notification according to settings. For example, the processing device 12 may output the notification only in response to the object geometric information corresponds to the highest risk. In another example, the processing device 12 may output a notification of any one of the four risks when the object geometric information corresponds to said any one of the four risks. However, the present disclosure is not limited thereto.

In addition, in one or more embodiments of the above, the processing device may use the same default encircle range to create the detection cross section during the movement of the mobile vehicle, or alternatively the processing device may select a corresponding detection cross section according to the current location of the mobile vehicle to create different detection cross sections for different locations. Herein, the current location may be obtained through GPS module 15 installed in the mobile vehicle.

In view of the above description, according to one or more embodiments of the present disclosure, the obstacle detection system 1 or obstacle detection method may, by using the LiDAR sensor to perform the obstacle detection, enable adaptability to environments such as nighttime and rainy conditions, thereby avoiding inaccuracies in detection results caused by environmental factors. Furthermore, according to one or more embodiments of the present disclosure, the obstacle detection system 1 or obstacle detection method does not require real-time monitoring by personnel, the deployment of multiple sensors along the travel direction of the moving vehicle, and/or the establishment of a database storing a large amount of image data. Thus, according to one or more embodiments of the present disclosure, the obstacle detection system 1 or obstacle detection method may reduce the cost of performing the obstacle detection. In addition, according to one or more embodiments of the present disclosure, the obstacle detection system 1 or obstacle detection method may be used perform the obstacle detection without the need to pre-record all potential obstacle data, providing high flexibility and adaptability. In some embodiments, the obstacle detection system 1 or obstacle detection method may, through the process of obtaining the path center line, prevent the LiDAR sensor from generating errors in sensing results for distant areas, which could otherwise lead to incorrect detection result. Therefore, by employing the above embodiments for obtaining the path center line, it is possible to effectively detect the distance between obstacle and the path center line, thereby producing reasonable detection result. Furthermore, by obtaining the path center line, during the movement of the mobile vehicle, the basis for the obstacle detection may be quickly corrected when there is a deviation between the currently generated path center line and the previously generated path center line.

## Claims

1. An obstacle detection method, performed by a processing device (12), comprising:
obtaining (S101) a plurality of first point clouds in a sensing range of a LiDAR sensor (14) by using the LiDAR sensor (14) to perform sensing, wherein the sensing range matches a moving direction of a mobile vehicle (MS);
obtaining (S103) a plurality of non-ground points according to the plurality of first point clouds;
obtaining (S105) a plurality of first boundary points (A1) and a plurality of second boundary points (A2) from the plurality of non-ground points;
obtaining (S107) a path center line (L2) according to an average of the plurality of first boundary points (A1) and the plurality of second boundary points (A2);
building (S109) a detection cross section (CS) by using the path center line (L2) according to a default encircle range; and
performing (S111) an obstacle detection by using the detection cross section (CS) to output a detection result.

2. The obstacle detection method according to claim 1, wherein the step of obtaining (S107) the path center line (L2) according to the average of the plurality of first boundary points (A1) and the plurality of second boundary points (A2) comprises:
obtaining (S201) a plurality of average center points (A3) of the plurality of first boundary points (A1) and the plurality of second boundary points (A2);
obtaining (S203) a temporary center line (L1) according to the average center points (A3);
removing (S205) at least a boundary point (A4), each with a distance to the temporary center line (L1) being outside of a default distance range, from the plurality of first boundary points (A1) and the plurality of second boundary points (A2) to obtain a plurality of first temporary points (A1') and a plurality of second temporary points (A2'); and
performing (S207) fitting based on the plurality of first temporary points (A1') and the plurality of second temporary points (A2') to generate the path center line (L2).

3. The obstacle detection method according to claim 2, wherein the distance is a vertical distance between the temporary center line (L1) and the boundary point, and the default distance range is smaller than a first default distance or greater than a second default distance.

4. The obstacle detection method according to claim 2, wherein a distance between two points, adjacent to each other in a default direction, among the plurality of first temporary points (A1') and the plurality of second temporary points (A2') falls within a first default distance range; wherein a distance between two points, adjacent to each other in the moving direction, among the plurality of first temporary points (A1') and the plurality of second temporary points (A2') falls within a second default distance range; and wherein the default direction is perpendicular to the moving direction.

5. The obstacle detection method according to claim 1, wherein the step of performing (S 111) the obstacle detection by using the detection cross section (CS) to output the detection result comprises:
determining (S301) a plurality of second point clouds located in a detection range corresponding to the detection cross section (CS) among the plurality of first point clouds; and
generating (S303) the detection result of the obstacle detection on the plurality of second point clouds.

6. The obstacle detection method according to claim 5, wherein the step of generating the detection result of the obstacle detection on the plurality of second point clouds comprises:
performing clustering on the plurality of second point clouds to generate object geometric information of an object, wherein the object geometric information indicates at least one of a location and a size of the object; and
outputting a notification in response to that an intrusion event is determined based on the object geometric information.

7. The obstacle detection method according to claim 1, wherein the step of obtaining the plurality of non-ground points according to the plurality of first point clouds comprises:
determining a plurality of point clouds, each with a height higher than a default ground height, among the plurality of first point clouds as the plurality of non-ground points.

8. The obstacle detection method according to claim 1, wherein a shape of the default encircle range is the same as that of the detection cross section (CS) or that of a partial contour of the detection cross section (CS), and the path center line (L2) acts as a normal vector of the detection cross section (CS).

9. The obstacle detection method according to claim 1, wherein the plurality of first boundary points (A1) and the plurality of second boundary points (A2) are a plurality of non-ground points each with a reflection intensity satisfying an intensity condition among the plurality of non-ground points, and the intensity condition is related to a material of driving site for the mobile vehicle (MS).

10. An obstacle detection system (1), comprising:
a memory device (11) configured to store a default encircle range; and
a processing device (12) electrically connected to or in communication connection with the memory device and at least a LiDAR sensor (14), the processing device (12) configured to:
obtain a plurality of first point clouds in a sensing range of the LiDAR sensor (14) from the LiDAR sensor (14), wherein the sensing range matches a moving direction of a mobile vehicle (MS);
obtain a plurality of non-ground points according to the plurality of first point clouds;
obtain a plurality of first boundary points (A1) and a plurality of second boundary points (A2) from the plurality of non-ground points;
obtain a path center line (L2) according to averages of the plurality of first boundary points (A1) and the plurality of second boundary points (A2);
building a detection cross section (CS) by using the path center line (L2) according to the default encircle range; and
performing an obstacle detection by using the detection cross section (CS) to output a detection result.

11. The obstacle detection system (1) according to claim 10, wherein for obtaining the path center line (L2), the processing device (12) is configured to:
obtain a plurality of average center points (A3) of the plurality of first boundary points (A1) and the plurality of second boundary points (A2);
obtain a temporary center line (L1) according to the average center points (A3);
remove at least a boundary point (A4), each with at least one distance to the temporary center line (L1) being outside of a default distance range, from the plurality of first boundary points (A1) and the plurality of second boundary points (A2) to obtain a plurality of first temporary points (A1') and a plurality of second temporary points (A2'); and
perform fitting based on the plurality of first temporary points (A1') and the plurality of second temporary points (A2') to generate the path center line (L2).

12. The obstacle detection system (1) according to claim 11, wherein the distance is a vertical distance between the temporary center line (L1) and the boundary point, and the default distance range is smaller than a first default distance or greater than a second default distance.

13. The obstacle detection system (1) according to claim 11, wherein a distance between two points, adjacent to each other in a default direction, among the plurality of first temporary points (A1') and the plurality of second temporary points (A2') in falls within a first default distance range; wherein a distance between two points, adjacent to each other in the moving direction, among the plurality of first temporary points (A1') and the plurality of second temporary points (A2') falls within a second default distance range; and wherein the default direction is perpendicular to the moving direction.

14. The obstacle detection system (1) according to claim 10, wherein the processing device (12) is configured to, during performing the obstacle detection, determine a plurality of second point clouds located in a detection range corresponding to the detection cross section (CS) among the plurality of first point clouds, and generate the detection result of the obstacle detection on the plurality of second point clouds.

15. The obstacle detection system (1) according to claim 14, wherein the processing device (12) is configured to, during performing the obstacle detection, perform clustering on the plurality of second point clouds to generate object geometric information of an object, and output a notification in response to that an intrusion event is determined based on the object geometric information, wherein the object geometric information indicates at least one of a location and a size of the object.

16. The obstacle detection system (1) according to claim 10, wherein the processing device (12) is configured to determine a plurality of point clouds, each with a height higher than a default ground height, among the plurality of first point clouds as the plurality of non-ground points.

17. The obstacle detection system (1) according to claim 10, wherein a shape of the default encircle range is the same as that of the detection cross section (CS) or that of a partial contour of the detection cross section (CS), and the path center line (L2) acts as a normal vector of the detection cross section (CS).

18. The obstacle detection system (1) according to claim 10, wherein the plurality of first boundary points (A1) and the plurality of second boundary points (A2) are a plurality of non-ground points each with a reflection intensity satisfying an intensity condition among the plurality of non-ground points, and the intensity condition is related to a material of driving site for the mobile vehicle (MS).

## Amended claims

### Amended claims in accordance with Rule 137(2) EPC.

1. An obstacle detection method, performed by a processing device (12), comprising:
obtaining (S101) a plurality of first point clouds in a sensing range of a LiDAR sensor (14) by using the LiDAR sensor (14) to perform sensing, wherein the sensing range matches a moving direction of a mobile vehicle (MS);
obtaining (S103) a plurality of non-ground points from the plurality of first point clouds each with a height higher than a default ground height;
obtaining (S105) a plurality of first boundary points (A1) and a plurality of second boundary points (A2) from the plurality of non-ground points each with reflection intensities lower than a default intensity;
calculating (S107) an average of each one of the plurality of first boundary points (A1) and a corresponding one of the plurality of second boundary points (A2) to obtain a path center line (L2);
building (S109) a detection cross section (CS) according to parameters of a plurality of points circling a default encircle range, wherein the parameters comprise heights of the plurality of points from the ground and distances of the plurality of points to the path center line (L2); and
performing (S111) an obstacle detection by using the detection cross section (CS) to output a detection result,
wherein the step of calculating (S107) the average of each one of the plurality of first boundary points (A1) and the corresponding one of the plurality of second boundary points (A2) comprises:
obtaining (S201) a plurality of average center points (A3) of said each one of the plurality of first boundary points (A1) and said corresponding one of the plurality of second boundary points (A2);
obtaining (S203) a temporary center line (L1) by performing fitting on the average center points (A3);
removing (S205) at least a boundary point (A4), each with a distance to the temporary center line (L1) being outside of a default distance range, from the plurality of first boundary points (A1) and the plurality of second boundary points (A2) to obtain a plurality of first temporary points (A1') and a plurality of second temporary points (A2'); and
performing (S207) fitting based on the plurality of first temporary points (A1') and the plurality of second temporary points (A2') to generate the path center line (L2).

2. The obstacle detection method according to claim 1, wherein the distance is a distance between the temporary center line (L1) and the boundary point, and the default distance range is smaller than a first default distance or greater than a second default distance.

3. The obstacle detection method according to claim 1, wherein a distance between two points, adjacent to each other in a default direction, among the plurality of first temporary points (A1') and the plurality of second temporary points (A2') falls within a first default distance range; wherein a distance between two points, adjacent to each other in the moving direction, among the plurality of first temporary points (A1') and the plurality of second temporary points (A2') falls within a second default distance range; and wherein the default direction is perpendicular to the moving direction.

4. The obstacle detection method according to claim 1, wherein the step of performing (S111) the obstacle detection by using the detection cross section (CS) to output the detection result comprises:
determining (S301) a plurality of second point clouds located in a detection range corresponding to the detection cross section (CS) among the plurality of first point clouds; and
generating (S303) the detection result of the obstacle detection on the plurality of second point clouds.

5. The obstacle detection method according to claim 4, wherein the step of generating the detection result of the obstacle detection on the plurality of second point clouds comprises:
performing clustering on the plurality of second point clouds to generate object geometric information of an object, wherein the object geometric information indicates at least one of a location and a size of the object; and
outputting a notification in response to that an intrusion event is determined based on the object geometric information.

6. The obstacle detection method according to claim 1, wherein the step of obtaining the plurality of non-ground points according to the plurality of first point clouds comprises:
determining a plurality of point clouds, each with a height higher than a default ground height, among the plurality of first point clouds as the plurality of non-ground points.

7. The obstacle detection method according to claim 1, wherein a shape of the default encircle range is the same as that of the detection cross section (CS) or that of a partial contour of the detection cross section (CS), and the path center line (L2) acts as a normal vector of the detection cross section (CS).

8. The obstacle detection method according to claim 1, wherein the plurality of first boundary points (A1) and the plurality of second boundary points (A2) are a plurality of non-ground points each with a reflection intensity satisfying an intensity condition among the plurality of non-ground points, and the intensity condition is related to a material of driving site for the mobile vehicle (MS).

9. An obstacle detection system (1), comprising:
a memory device (11) configured to store a default encircle range; and
a processing device (12) electrically connected to or in communication connection with the memory device and at least a LiDAR sensor (14), the processing device (12) configured to:
obtain a plurality of first point clouds in a sensing range of the LiDAR sensor (14) from the LiDAR sensor (14), wherein the sensing range matches a moving direction of a mobile vehicle (MS);
obtain a plurality of non-ground points from the plurality of first point clouds each with a height higher than a default ground height;
obtain a plurality of first boundary points (A1) and a plurality of second boundary points (A2) from the plurality of non-ground points each with reflection intensities lower than a default intensity;
calculate an average of each one of the plurality of first boundary points (A1) and a corresponding one of the plurality of second boundary points (A2) to obtain a path center line (L2);
building a detection cross section (CS) according to parameters of a plurality of points circling a default encircle range, wherein the parameters comprise heights of the plurality of points from the ground and distances of the plurality of points to the path center line (L2); and
performing an obstacle detection by using the detection cross section (CS) to output a detection result,
wherein for obtaining the path center line (L2), the processing device (12) is configured to:
obtain a plurality of average center points (A3) of said each one of the plurality of first boundary points (A1) and said corresponding one of the plurality of second boundary points (A2);
obtain a temporary center line (L1) by performing fitting on the average center points (A3);
remove at least a boundary point (A4), each with at least one distance to the temporary center line (L1) being outside of a default distance range, from the plurality of first boundary points (A1) and the plurality of second boundary points (A2) to obtain a plurality of first temporary points (A1') and a plurality of second temporary points (A2'); and
perform fitting based on the plurality of first temporary points (A1') and the plurality of second temporary points (A2') to generate the path center line (L2).

10. The obstacle detection system (1) according to claim 9, wherein the distance is a distance between the temporary center line (L1) and the boundary point, and the default distance range is smaller than a first default distance or greater than a second default distance.

11. The obstacle detection system (1) according to claim 9, wherein a distance between two points, adjacent to each other in a default direction, among the plurality of first temporary points (A1') and the plurality of second temporary points (A2') in falls within a first default distance range; wherein a distance between two points, adjacent to each other in the moving direction, among the plurality of first temporary points (A1') and the plurality of second temporary points (A2') falls within a second default distance range; and wherein the default direction is perpendicular to the moving direction.

12. The obstacle detection system (1) according to claim 9, wherein the processing device (12) is configured to, during performing the obstacle detection, determine a plurality of second point clouds located in a detection range corresponding to the detection cross section (CS) among the plurality of first point clouds, and generate the detection result of the obstacle detection on the plurality of second point clouds.

13. The obstacle detection system (1) according to claim 12, wherein the processing device (12) is configured to, during performing the obstacle detection, perform clustering on the plurality of second point clouds to generate object geometric information of an object, and output a notification in response to that an intrusion event is determined based on the object geometric information, wherein the object geometric information indicates at least one of a location and a size of the object.

14. The obstacle detection system (1) according to claim 9, wherein the processing device (12) is configured to determine a plurality of point clouds, each with a height higher than a default ground height, among the plurality of first point clouds as the plurality of non-ground points.

15. The obstacle detection system (1) according to claim 9, wherein a shape of the default encircle range is the same as that of the detection cross section (CS) or that of a partial contour of the detection cross section (CS), and the path center line (L2) acts as a normal vector of the detection cross section (CS).

16. The obstacle detection system (1) according to claim 9, wherein the plurality of first boundary points (A1) and the plurality of second boundary points (A2) are a plurality of non-ground points each with a reflection intensity satisfying an intensity condition among the plurality of non-ground points, and the intensity condition is related to a material of driving site for the mobile vehicle (MS).
